# EUROPEAN PATENT SPECIFICATION

(11) **EP 0 836 039 B1**
(45) Date of publication and mention of the grant of the patent: **21.11.2001**
(21) Application number: 97915492.9
(22) Date of filing: 07.04.1997
(51) Int. Cl.: F16H 59/02, G05G 25/04, B60K 20/04

(54) **FLEXIBLE COVER ADAPTABLE TO THE AUTOMATIC GEARSHIFT LEVER OF MOTOR VEHICLES**
FLEXIBLE ABDECKUNG ZUR ANPASSUNG AN DEN AUTOMATIKSCHALTHEBEL EINES KRAFTFAHRZEUGES
ELEMENT DE COUVERTURE FLEXIBLE ADAPTABLE AU LEVIER DE CHANGEMENT DE VITESSE AUTOMATIQUE DE VEHICULES AUTOMOBILES

(30) Priority: 24.04.1996 ES 9600092
(43) Date of publication of application: 15.04.1998
(73) Proprietor: Fico Triad S.A., 08028 Barcelona (ES)
(72) Inventor: LLORENS PERELLO, José Oriol, E-08029 Barcelona (ES)
(74) Representative: SUGRANES - VERDONCES - FERREGÜELA
(86) International application number: ES9700085
(87) International publication number: WO9740299

(56) References cited:
- EP-A- 0 718 528
- DE-U- 7 117 022
- US-A- 3 258 093
- US-A- 4 565 151
- US-A- 4 991 535

## Description

### Technical field of the invention

The present invention relates to a flexible cover which can be fitted to the automatic-transmission gear shift lever of automobile vehicles.

### Background of the invention

As is known, the automatic-transmission gear shift lever of automobile vehicles projects into the passenger compartment of the vehicle, traversing a passage device which includes a generally "U"-shaped guiding body whose arms are coupled onto the support of the shift lever fixed to the structure of the automobile vehicle. Essentially, said guiding body comprises two half-shells, exterior and interior, respectively, which can be coupled to each other complementarily and in such a way that the exterior half-shell faces towards the driving compartment while the interior half-shell faces the support of the lever. Both half-shells, exterior and interior, have respective through-slots arranged longitudinally and so designed that, once coupled together, both slots are traversed by the lever arm, the through-slot of the exterior half-shell, or guiding slot, having a stepped layout adapted to the shifting movements which the user applies longitudinally to the lever arm to situate it in the various drive regimes of the automatic-transmission gearbox.

Said coupling of exterior and interior half-shells of the guiding body is implemented in such a way that between the corresponding facing sides, on which said through-slots are situated, a passage is formed which runs longitudinally and uninterruptedly between the ends of the said arms of the guiding body, which passage has a cross section of rectangular outline which remains constant over its entire length. It is this longitudinal passage which has a flexible laminar cover of essentially rectangular outline whose central portion is provided with a through-orifice which is traversed by the lever arm, the flexible cover being so designed that, when the lever arm is actuated, it can slide in both directions through the passage formed by coupling of the exterior and interior half-shells, thus covering the through-slot of the lower half-shell and preventing it being traversed by solid bodies which might affect operation of the mechanisms linked to the shift lever.

Known in the art are many embodiments of flexible covers having the purpose described above, amongst which covers we might cite the following:
- flexible covers of uniform thickness formed by a sheet of plastic material whose largest sides have a smooth finish, and
- flexible covers of uniform thickness structured on a support of textile material, in which the largest side facing the exterior half-shell has a smooth finish, while the opposite side facing the lower half-shell has a finish consisting in a transversally mounted toothed section, the purpose of said toothed section being to lend the flexible cover a certain capacity to adapt to small radii of curvature.

The patent document US-A-3,285,093 discloses a device for sealing structures, according to the preamble of claim 1, for improvements in shift consoles incorporating cover seals for shift lever openings. The console comprises an elongated flexible cover seal having free end portions and outwardly extending tongue portions on opposite sides for slidably mounting said seal in a track portion. The flexible cover comprises an elongated slot through which the control lever extends.

Patent document US-A-4,565,151 discloses an apparatus for indicating a range position for an automatic transmission installed in a vehicle. The apparatus includes a range position indicating means that are slidably moved by operation of control lever arm for indicating the selected range position.

In general, such known embodiments of flexible covers have the following disadvantages. The covers of plastic material of uniform thickness have little capacity for adaptation when the passage through which they are to slide follows a markedly curved path, for which reason they are generally coupled to the guiding body in such a way that both their ends project from same and take up an external position, which position of said ends of the cover varies in function of the lever arm, thereby influencing the location of parts close to the guiding body. And the covers structured on a support of textile material have the main disadvantage of being made up of a plurality of layers, and specifically three layers of which the central layer is of textile material, superimposed upon each other, which notably increases production costs.

### Explanation of the invention

A flexible cover of new structure and operation which can be fitted to the automatic-transmission gear shift lever of automobile vehicles is made known hereby in order to provide a solution to all the above-mentioned disadvantages presented by the known embodiments of flexible covers.

The flexible cover of the invention can be fitted to the longitudinal passage formed by the joining of two half-shells, exterior and interior respectively, which make up a guiding body of the lever arm, in which the exterior half-shell is mounted facing into the passenger compartment of the vehicle and the lower half-shell is mounted facing towards the lever support, the flexible cover being of a single piece and taking the form of a sheet with an essentially elongated rectangular outline, which is characterized in that, three longitudinally arranged portions can be distinguished, one central portion and two equal side portions which are not as thick as the central portion, the central portion including a prismatic central body having a transverse through-recess designed to be traversed with a snug fit by the lever arm of the gear shift, and both of the larger sides of the central body having their exterior sides facing the exterior half-shell and the interior sides facing the interior half-shell provided with a smooth finish, and in that the two side portions of the flexible cover have their exterior sides, facing the exterior half-shell provided with a smooth finish, and their interior sides, facing the interior half-shell, provided with transversally mounted toothed sections.

The aforesaid characteristics of the cover of the invention provide a solution to the above-described disadvantages presented by the known embodiments of flexible covers. The fact that the flexible cover of the invention is single-piece greatly reduces the production costs when compared with those known embodiments of covers made up of a plurality of layers superimposed upon each other. Moreover, the characteristic configuration of the side portions of the cover of the invention, and particularly the toothed section on the sides facing the interior half-shell, lends the cover very high flexibility which allows it to adapt to passages of the guiding body including curved sections of very small radius. Furthermore, the greater thickness of the central portion permits movements of the flexible cover through the guiding body in both directions, driven by the lever arm, to be implemented with minimum abrasion between the side portions of the cover and the corresponding facing surfaces of the exterior and interior half-shells, thereby facilitating the action of said lever arm.

Another characteristic of the lever arm of the invention consists in the free ends of the side portions having on their interior side a respective transverse thickened section of a thickness less than that of the central body.

Another characteristic of the flexible cover of the invention consists in the interior side of the flexible body including means for the coupling of a part to mark the position of the lever arm.

Another characteristic of the flexible cover of the invention consists in the exterior sides of the central body and of the side portions being coplanar with respect to each other.

### Brief description of the drawings

The drawings sheets of the present specification show the flexible cover of the invention which can be fitted to the automatic-transmission gear shift lever of automobile vehicles. In said drawings:
Figure 1 is a plan view of a guiding body provided with an exterior cover to which is coupled the flexible cover of the invention;
Figure 2 is a side view of the guiding body and exterior cover shown in Figure 1;
Figure 3 is the view along section III-III obtained from Figure 1;
Figure 4 is a section view showing the flexible cover of the invention in a position different from that shown in Figure 3;
Figure 5 is a plan view from the interior side of the flexible cover of the invention;
Figure 6 is a side view of the flexible cover of the invention;
Figure 7 is a plan view from the exterior side of the flexible cover of the invention.

### Detailed description of the example of embodiment

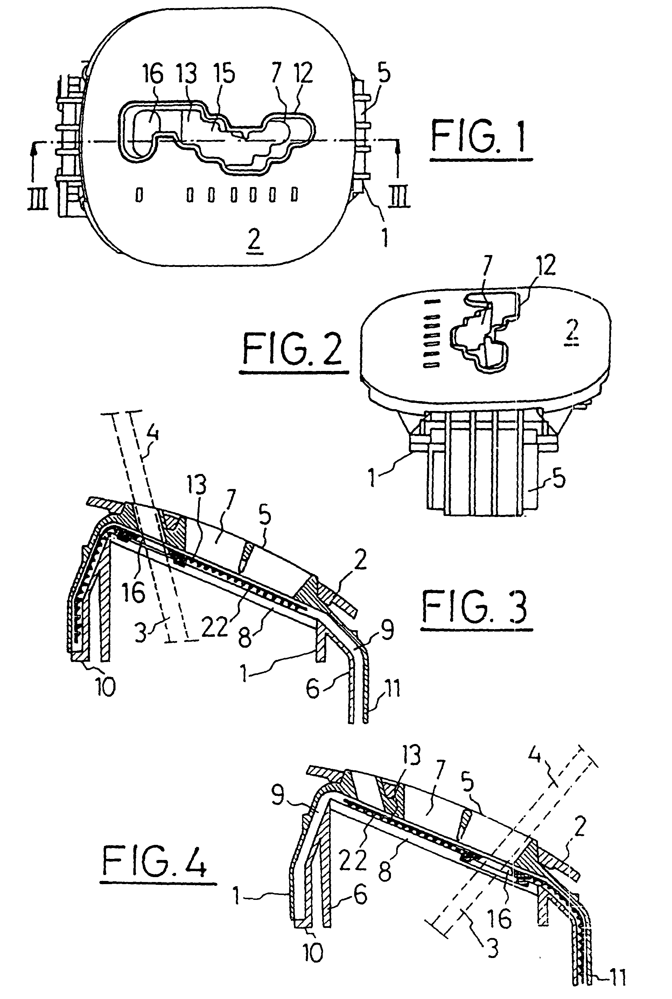

The flexible cover of the invention which is described as an example of embodiment can be coupled as shown in Figures 1 to 4 to a guiding body 1 provided in this example of application with an exterior cover 2. For the purposes of achieving greater clarity of outline, the figures of the drawing sheets show neither the support of the gear shift lever nor the attachment onto same of the guiding body 1: neither do they show those parts of the vehicle bodywork attached to the guiding body 1 or the means for mutual coupling of the guiding body 1 and the exterior cover 2. Figures 3 arid 4 show partially by means of broken lines the lever arm 3 whose exterior end 4, traversing the guiding body 1 and the exterior cover 2, is left projecting into the passenger compartment of the vehicle, where it is acted upon by the user in order to change the running regime of the gearbox.

The guiding body 1 is formed by the mutual coupling of an exterior half-shell 5 and an interior half-shell 6 shown in section in Figures 3 and 4. Both half-shells 5, 6 are preferably made by injection of plastics and present a longitudinal section of generally U-shaped outline. The exterior half-shell 5 has a longitudinally arranged guiding slot 7 which, as shown in Figures 1 and 2, presents a stepped outline to adapt to the various positions to be occupied by the lever arm 3. And the interior half-shell 6 has a longitudinally arranged through-slot 8 with a cross section of rectangular outline whose width matches the maximum width reached by the guiding slot 7, with both slots 7, 8 being designed in such a way that the coupling of both half-shells 5, 6 places them facing each other. This coupling of the upper 5 and lower 6 half-shells forms a longitudinal passage 9, shown in Figures 3 and 4, which runs between the ends 10, 11 of the guiding body 1, which passage 9 has a cross section of rectangular outline which is kept uniform throughout its length.

The exterior cover 2 has an essentially quadrangular outline with rounded vertices and is preferably made by injection of plastics. Figures 1 and 2 show how the exterior cover 2 includes a through-slot which matches the guiding slot 7 of the exterior half-shell 5.

The guiding body 1 and the exterior cover 2 shown in Figures 1 to 4 are provided solely by way of example of application of the flexible cover of the invention, since both parts 1, 2 may adopt any layout suited to each specific case of application without this affecting the essential nature of the invention.

The above description in relation to the guiding body 1 and the exterior cover 2 is known and extensively utilized by many known embodiments of devices for passage of the lever arm 3 into the driving compartment of a vehicle.

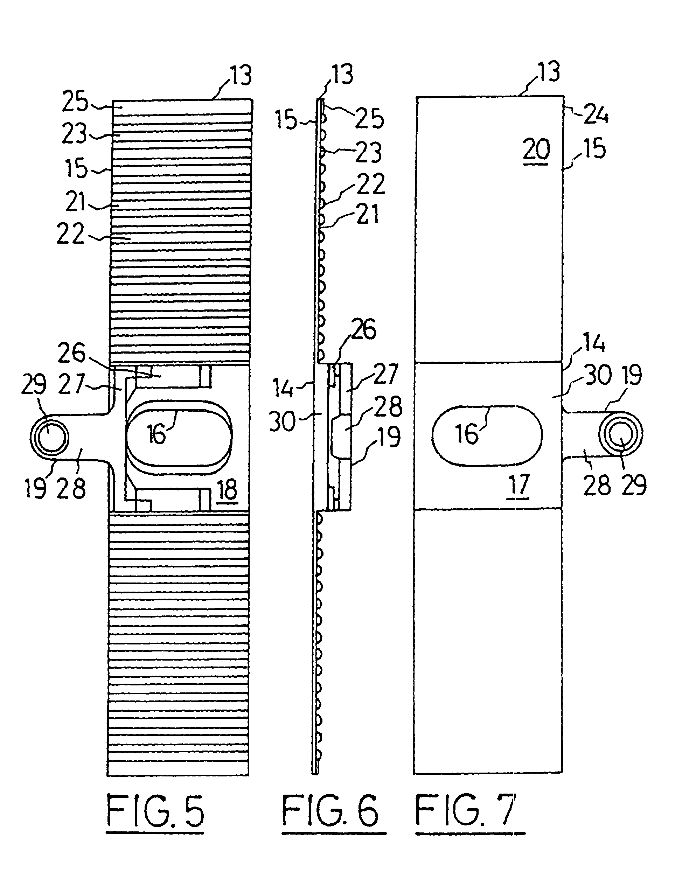

Figures 5, 6 and 7 show how the flexible cover 13 of the invention is laminar and has an outline which is of generally long rectangular shape. The flexible cover 13 is preferably made by injection of plastics of high flexibility and mechanical strength, it having longitudinally a central portion 14 and two equal side portions 15 which are not as thick as the central portion 14. The central portion 14 forms a central body 30, having centred and running transversally a recess hole 16, while its exterior side 17 has a smooth finish and its interior side 18 has means 19 for the coupling of a device to mark the position of the lever arm 3. The side portions 15 have respective exterior sides 20 which are smooth and arranged coplanar to the smooth exterior side 17 of the central body 30, as shown in Figure 6, while their interior sides 21 have respective transverse toothed sections 22 regularly arranged as shown in Figures 5 and 6 and made up of a plurality of thickened portions 23 of semicircular cross section which run along the width of the side portions 15. Figures 5 and 6 show how the side portions 15 have their respective free ends 24 provided with a thickened reinforcing section 25.

In this example of embodiment of the flexible cover 13 of the invention, the means 19 shown in Figures 5, 6 and 7, are arranged symmetrically with respect to the theoretical main transverse axis of the central body 30, and include two thickened sections 26 laid out on either side of the recess 16 and linked by a bridge-piece 27 from which there projects in centred position a retaining extension 28 provided with a retaining orifice 29 designed to receive a part with a pilot light to show the position of the lever arm 3, such as a specular surface (not shown). The means 19 described are provided solely by way of example, it being understood that they can take on any other configuration suited to each specific case of application without this affecting the essential nature of the invention.

The flexible cover 13 is so adapted that, as shown in Figures 3 and 4, it is mounted with a snug fit in the longitudinal passage 9 formed by coupling of the exterior 5 and interior 6 half-shells of the guiding body 1. The flexible cover 13 has the toothed sections 22 of its side portions 15 arranged facing the interior half-shell 6, while the recess 16 of the central body 30 is traversed by the lever arm 3, in such a way that, as shown in Figure 1, it permits transverse movements of said arm 3. With these arrangements, Figures 3 and 4 show how travel of the lever arm 3 in one direction or another leads to a corresponding movement of the flexible cover 13 through the longitudinal passage 9 so that, in any position occupied by the lever arm 3, it covers all of the through-slot 8 of the interior half--shell 6, thereby preventing the entry of bodies which might adversely affect operation of the mechanisms linked to the lever arm 3.

## Claims

1. A flexible cover which can be fitted to the automatic-transmission gear shift lever of automobile vehicles and can be coupled to the longitudinal passage (9) formed by the joining of two half-shells, exterior (5) and interior (6) respectively, which make up a guiding body (1) of the lever arm (3), in which the exterior half-shell (5) is mounted facing into the passenger compartment of the vehicle and the lower half-shell (6) is mounted facing towards the lever support, the flexible cover (13) being of a single piece and taking the form of a sheet with an essentially elongated rectangular outline, which is **characterized in that**, three longitudinally arranged portions can be distinguished, one central portion (14) and two equal side portions (15) which are not as thick as the central portion (14), the central portion (14) including a prismatic central body (30) having a transverse through-recess (16) designed to be traversed with a snug fit by the lever arm (3) of the gear shift, and both of the larger sides (17, 18) of the central body (30) having their exterior sides (17) facing the exterior half-shell (5) and the interior sides (18) facing the interior half-shell (6), with a smooth finish, and **in that** the two side portions (15) of the flexible cover (13) have their exterior sides (20) facing the exterior half-shell (5), provided with a smooth finish, and their interior sides (21), provided with transversally mounted toothed sections (22), facing the interior half-shell (6).

2. A flexible cover as claimed in Claim 1, **characterized in that** the free ends (24) of the side portions (15) have on their interior side (21) a respective transverse thickened section (25) of a thickness less than that of the central body (30).

3. A flexible cover as claimed in Claims 1 and 2, **characterized in that** the interior side (18) of the central body (30) includes means (19) for the coupling of a part to mark the position of the lever arm (3).

4. A flexible cover as claimed in Claims 1 to 3, **characterized in that** the exterior sides (17, 20) of the central body (30) and of the side portions (15) are coplanar with respect to each other.

## Patentansprüche

1. Flexible Abdeckung, die an den Automatikschalthebel von Automobil-Fahrzeugen angepasst werden kann und welche mit dem Längsdurchgang (9) gekoppelt werden kann, der durch die Verbindung zweier Halbschalen ausgebildet wird, jeweils äußerer (5) und innerer (6), welche einen Führungskörper (1) des Schaltarmes ausbilden, wobei die äußere Halbschale (5) dem Passagierraum des Fahrzeuges zugewandt befestigt ist und die untere Halbschale (6) dem Hebelträger zugewandt befestigt ist, wobei die flexible Abdeckung (13) aus einem einzigen Stück ist und die Form eines Flachkörpers mit einem im Wesentlichen länglichen, rechteckigen Umriss einnimmt, **dadurch gekennzeichnet, dass** drei längs angeordnete Abschnitte unterschieden werden können, ein Mittelabschnitt (14) und zwei gleiche Seitenabschnitte (15), welche nicht so dick sind wie der Mittelabschnitt (14), wobei der Mittelabschnitt (14) einen prismatischen Mittelkörper (30) umfasst, der eine durchgehende Querausnehmung (16) hat, die so ausgestaltet ist, dass sie in enger Passung durch den Hebelarm (3) der Schaltung gequert werden kann, und wobei die beiden größeren Seiten (17, 18) des Mittelkörpers (30) äußere Seiten (17) haben, die der äußeren Halbschale (5) zugewandt sind, und die inneren Seiten (18) der inneren Halbschale (6) zugewandt sind, mit glatter Oberflächenausführung, und dadurch, dass die beiden Seitenabschnitte (15) der flexiblen Abdeckung (13) äußere Seiten (20) haben, die der äußeren Halbschale (5) zugewandt und mit einer glatten Oberflächenbeschaffenheit versehen sind, und innere Seiten (21), die mit quer angebrachten gezahnten Abschnitten (22) versehen, und der inneren Halbschale (6) zugewandt sind.

2. Flexible Abdeckung nach Anspruch 1, **dadurch gekennzeichnet, dass** die freien Enden (24) der Seitenabschnitte (15) auf ihrer inneren Seite (21) einen jeweiligen quer verdickten Abschnitt (25) haben, mit einer Dicke, die geringerer ist als diejenige des Mittelkörpers (30).

3. Flexible Abdeckung nach den Ansprüchen 1 und 2, **dadurch gekennzeichnet, dass** die Innenseite (18) des Mittelkörpers (30) eine Vorrichtung (19) umfasst, zum Koppeln eines Teils, um die Position des Hebelarmes (3) zu markieren.

4. Flexible Abdeckung nach den Ansprüchen 1 bis 3, **dadurch gekennzeichnet, dass** die äußeren Seiten (17, 20) des Mittelkörpers (30) und der Seitenabschnitte (15) koplanar zueinander sind.

## Revendications

1. Elément protecteur souple pouvant être adapté au levier de changement de vitesse d'une transmission automatique de véhicules automobiles et pouvant être couplé au passage longitudinal (9) formé par l'assemblage de deux demi-coques, respectivement extérieure (5) et intérieure (6), qui constituent un corps de guidage (1) du bras de levier (3), dans lequel la demi-coque extérieure (5) est montée de façon à être tournée vers le compartiment passager du véhicule et la demi-coque intérieure (6) est montée de façon à être tournée vers le support de levier, ledit élément protecteur souple (13) étant constitué d'une seule pièce et ayant la forme d'une feuille à contour rectangulaire essentiellement allongé, et étant **caractérisé en ce que** l'on peut distinguer trois parties disposées longitudinalement, une partie centrale (14) et deux parties latérales égales (15) qui ne sont pas aussi épaisses que la partie centrale (14), la partie centrale (14) comprenant un corps central prismatique (30) comportant un évidement traversant transversal (16) conçu pour être traversé avec un ajustement à frottement doux par le bras de levier (3) du changement de vitesse, et parmi les deux grandes faces (17, 18) du corps central (30), la face extérieure (17) est tournée vers la demi-coque extérieure (5) et la face intérieure (18) est tournée vers la demi-coque intérieure (6) avec un fini lisse, et **en ce que** la face extérieure (20) tournée vers la demi-coque extérieure (5) des deux parties latérales (15) de l'élément protecteur souple (13) est pourvue d'un fini lisse, tandis que leur face intérieure (21) tournée vers la demi-coque intérieure (6) est pourvue de sections dentées disposées transversalement (22).

2. Gaine protectrice souple selon la revendication 1, **caractérisée en ce que** les extrémités libres (24) des parties latérales (15) comportent sur leur face intérieure (21) une section transversale épaissie respective (25) d'une épaisseur inférieure à celle du corps central (30).

3. Gaine protectrice souple selon les revendications 1 et 2, **caractérisée en ce que** le côté intérieur (18) du corps central (30) comprend un moyen (19) destiné au raccordement d'une pièce pour marquer la position du bras de levier (3).

4. Gaine protectrice souple selon les revendications 1 à 3, **caractérisée en ce que** les côtés extérieurs (17, 20) du corps central (30) et des parties latérales (15) sont coplanaires les uns par rapport aux autres.
